# EUROPÄISCHE PATENTANMELDUNG

(11) **EP 2 143 970 A1**
(43) Veröffentlichungstag der Anmeldung: **13.01.2010**
(21) Anmeldenummer: 09163871.8
(22) Anmeldetag: 26.06.2009
(51) Int. Cl.: F16F 9/32, F16F 9/34

(54) **Schwingungsdämpfer mit einer ventilgesteuerten Fluidverbindung**

(30) Priorität: 07.07.2008 DE 102008040210
(71) Anmelder: ZF Friedrichshafen AG, 88038 Friedrichshafen (DE)
(72) Erfinder: Hammer, Thomas, 97653, Bischofsheim (DE); Eichenmüller, Thomas, 97453, Schonungen (DE); Berger, Stefan, 97078 Würzburg (DE)

(57) **Zusammenfassung**

Schwingungsdämpfer (1), umfassend einen Zylinder (3), der von einem Kolben (7) an einer Kolbenstange (5) in einen kolbenstangenseitigen und einen kolbenstangenfernen Arbeitsraum (9,11) unterteilt wird, wobei eine Fluidverbindung (21) zu mindestens einen der Arbeitsräume (9,11) von einem Rückschlagventil (37) angesteuert wird, das eine radiale Anschlussöffnung (29) aufweist, die mit einem Ventilelement (35) zusammenwirkt, und sich der radialen Anschlussöffnung (29) ein in Längsrichtung des Schwingungsdämpfers erstreckender Kanal (33) anschließt, der von dem mindestens einem Ventilelement (35) abgedeckt wird.

## Beschreibung

Die Erfindung betrifft einen Schwingungsdämpfer gemäß dem Oberbegriff von Patentanspruch 1.

Aus der DE 10 2006 054 257 A1 ist ein Schwingungsdämpfer bekannt, dessen Zylinder von einem Kolben in zwei Arbeitsräume unterteilt wird. Beide Arbeitsräume verfügen jeweils über mindestens eine Anschlussöffnung zu einer Fluidverbindung, die die beiden Arbeitsräume miteinander verbindet. Die Fluidverbindung wird von einem Zwischenrohr gebildet, das radial außerhalb des Zylinders angeordnet ist. Ein kolbenstangenferner Arbeitsraum wird endseitig von einem Bodenventil begrenzt, das ein in Richtung des Arbeitsraums sich öffnendes Rückschlagventil aufweist. Dieses Rückschlagventil ermöglicht den Zustrom von Dämpfmedium aus einem Ausgleichsraum in den kolbenstangenfernen Arbeitsraum.

Ein weiteres Rückschlagventil steuert einen Volumenstrom zwischen der Fluidverbindung und dem kolbenstangenfernen Arbeitsraum. Das Rückschlagventil wird von einem radial elastischen Federring gebildet, der eine Anschlussöffnung in einem dem Bodenventil zugeordneten Ventilring abdeckt. Ein wesentlicher Vorteil dieser Rückschlagventilkonstruktion besteht in dem sehr einfachen Aufbau. Andererseits ist das Rückschlagventil hinsichtlich seiner Dichtfunktion und seines Ansprechverhaltens bei sehr anspruchsvollen Schwingungsdämpfertypen nicht immer ausreichend gut. Z. B. Schwingungsdämpfer mit amplitudenselektiver Dämpfkraft oder auch Schwingungsdämpfer mit verstellbarer Dämpfkraft verlangen nach sehr präzise fungierenden Rückschlagventilen.

Die Aufgabe der vorliegenden Erfindung besteht darin, ein Rückschlagventil für die Fluidverbindung derart weiterzuentwickeln, dass einerseits ein sehr präzises Ansprech - und Dichtverhalten und andererseits eine insgesamt sehr einfache Ventilkonstruktion vorliegt.

Erfindungsgemäß wird die Aufgabe dadurch gelöst, sich der radialen Anschlussöffnung ein in Längsrichtung des Schwingungsdämpfers erstreckender Kanal anschließt, der von einem Ventilelement abgedeckt wird.

Die in Längsrichtung verlaufende Kanalform ermöglicht die Verwendung eines konventionellen Federelements, das sich sehr genau definieren und herstellen lässt.

Gemäß einem vorteilhaften Unteranspruch wird als Ventilelement eine Ventilscheibe von mindestens einem Federelement in Schließrichtung vorgespannt.

Bei einer Ausführungsform wird das Rückschlagventil von einem mehrteiligen ringförmigen Ventilkörper gebildet, wobei der Ventilkörper im Bereich des Kanals eine Teilungsfuge aufweist. Folglich lassen sich die Ventilkörpereinzelteile vergleichsweise einfach herstellen, insbesondere durch ein Druck - oder Spritzgussverfahren, da Hinterschneidungen und damit verbundene komplizierte Werkzeugformen vermieden werden.

So ist vorgesehen, dass mindestens zwei Ventilkörper über in Längsrichtung parallele Mantelflächen eine Presspassung bilden. Die Presspassung verbindet die Ventilkörpereinzelteile und ermöglicht eine von der Gesamtmontage des Schwingungsdämpfers unabhängige Vorproduktion des Ventilkörpers als Unterbaueinheit.

Alternativ oder zusätzlich ist zwischen den einzelnen Ventilkörperbauteilen mindestens eine Ringdichtung angeordnet. Die Vorspannung der Ringdichtung verbindet die Ventilkörperbauteile und sorgt so ebenfalls für den Zusammenhalt im Hinblick auf eine Baueinheit.

Des Weiteren ist vorgesehen, dass mindestens zwei ringförmigen Ventilkörper einen Ringraum bilden, der an den Kanal angeschlossen ist und die Ventilscheibe aufnimmt.

In dem Ringraum ist zumindest teilweise ein weiterer Ventilkörper angeordnet. Durch diese besondere Merkmalskombination ist der Hubweg der Ventilscheibe definiert und es stehen Flächen für die Presspassung zur Verfügung.

Für eine besonders kompakte Bauform ist das Federelement als eine Scheibenfeder ausgeführt.

Die Scheibenfeder kann in einem Zentrierring zum Ventilkörper gelagert sein. Vorteilhafterweise weist der Zentrierring einen u - förmigen Querschnitt auf. Mit diesem Konstruktionsprinzip wird die Dimensionierung der Scheibenfeder von der räumlichen Ausgestaltung des Ventilkörpers etwas unabhängiger im Vergleich zu einer Bauform, bei der sich die Scheibenfeder direkt am Ventilkörper abstützt und/oder zentriert.

Zur Vermeidung einer Geräuschbildung ist der Zentrierring axial in beide Richtungen fixiert.

Bei einer alternativen Ausführungsform stützt sich das Federelement an einem vom Ventilkörper separaten Bauteil ab. Wenn sich eine Scheibenfeder direkt am ringförmigen Ventilkörper abstützen würde, benötigte man einen radialen Absatz als Stützfläche für die Scheibenfeder. Dieser radiale Absatz würde zu einer Hinterschneidung am ringförmigen Ventilkörper führen. Ein separates Bauteil mit einer Stützfläche für das Federelement umgeht dieses Problem.

Eine Variante zeichnet sich dadurch aus, dass der Ventilkörper eine montierbare Stützfläche für das Federelement aufweist.

Im einfachsten Fall wird die montierbare Stützfläche von einem Sicherungsring gebildet.

Neben der Ventilfunktion kann der Ventilkörper noch weitere Funktionen übernehmen. So kann vorgesehen sein, dass der Ventilkörper eine erste axiale Stützfläche für den Zylinder und eine zweite axiale Stützfläche für ein Fluidverbindungsrohr aufweist. Damit übt der Ventilkörper eine Stütz - und eine radiale Zentrierfunktion aus.

Bei einer bevorzugten Ausführungsform stützt sich der Ventilkörper an einem Bodenventil des kolbenstangenfernen Arbeitsraums ab.

Man kann auch vorsehen, das Bodenventil ein erstes in Zuströmrichtung in den kolbenstangenfernen Arbeitsraum sich öffnendes Rückschlag umfasst und der Ventilkörper ein zusätzliches in den kolbenstangenfernen Arbeitsraum sich öffnendes Rückschlagventil aufweist. Diese Bauform bietet eine zweistufige Querschnittsbildung z. B. von einem Ausgleichsraum in einen Arbeitsraum des Schwingungsdämpfers.

Anhand der folgenden Figurenbeschreibung soll die Erfindung näher erläutert werden.

Es zeigt:
- Fig. 1: Rückschlagventil mit einem einteiligen Ventilkörper
- Fig. 2: Rückschlagventil mit einem mehrteiligen Ventilkörper
- Fig. 3 und 4: Rückschlagventil in einem Ringraum des Ventilkörpers

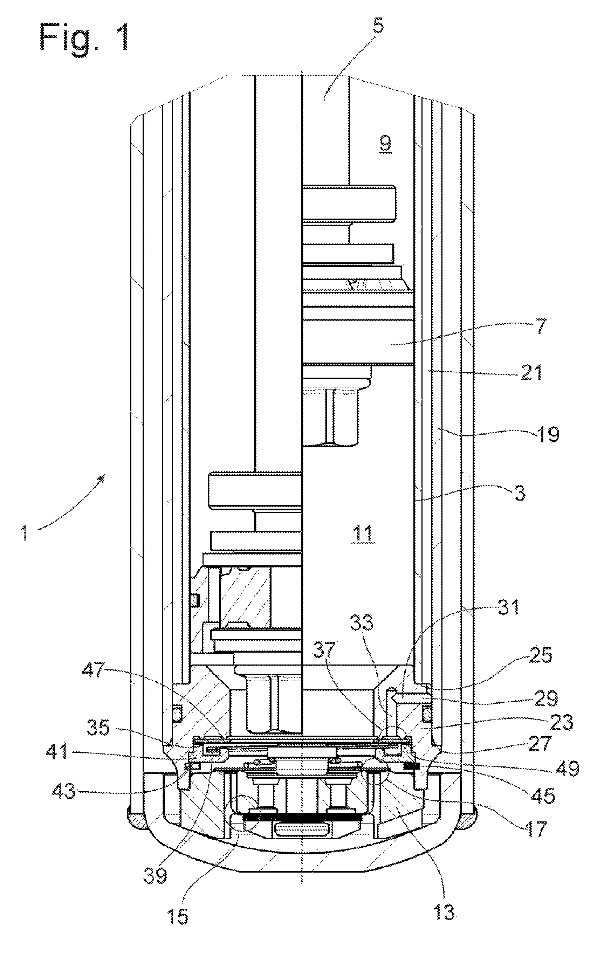

Die Fig. 1 zeigt einen Schwingungsdämpfer 1 mit einem Zylinder 3, in dem eine Kolbenstange 5 mit einem Kolben 7 axial beweglich geführt ist. Der Kolben 7 unterteilt den Zylinder 3 in einen kolbenstangenseitigen und einen kolbenstangenfernen Arbeitsraum 9; 11, wobei der Kolben 7 als einfacher geschlossener Verdrängerkörper oder als ein mit Durchtrittsquerschnitten und Ventilscheiben bestückter Dämpfventilkolben ausgeführt sein kann.

Endseitig wird der kolbenstangenferne Arbeitsraum 11 von einem Bodenventilkörper 13 begrenzt, wobei der Bodenventilkörper 13 mit einem Dämpfventil 15 und einem in Einströmrichtung in den kolbenstangenfernen Arbeitsraum 11 sich öffnenden Rückschlagventil 17 bestückt ist.

Konzentrisch zum Zylinder 3 ist ein Fluidverbindungsrohr 19 angeordnet, dessen Fluidverbindung 21 über einen ringförmigen Ventilkörper 23 an den kolbenstangenfernen Arbeitsraum 11 angeschlossen ist. Die Fluidverbindung 21 kann z. B. für eine Bypassverbindung zu einem Dämpfventil im Kolben oder zum Bodenventil 15 genutzt werden. Der Ventilkörper 23 ist axial zwischen dem Zylinder 3 und dem Bodenventilkörper 13 verspannt. Dafür verfügt der Ventilkörper 23 über eine erste axiale Stützfläche 25 für den Zylinder 3. Eine zweite axiale Stützfläche 27 am Ventilkörper 23 übernimmt die axiale Positionierung des Fluidverbindungsrohrs 19.

Der Ventilkörper 23 verfügt über eine radiale Anschlussöffnung 29, dem sich ein Radialkanal 31 anschließt. Der Radialkanal 31 ist mit einem sich in Längsrichtung des Schwingungsdämpfers erstreckender Kanal 33 verbunden, dessen Ausgangsöffnung in den kolbenstangenfernen Arbeitsraum 11 von einem Ventilelement 35 in der Bauform einer Ventilscheibe abgedeckt wird und damit ein Rückschlagventil 37 bildet.

Die Ventilscheibe 35 wird von mindestens einem Federelement 39 in Schließrichtung vorgespannt, wobei das Federelement 39 als eine Scheibenfeder ausgeführt ist. Die Scheibenfeder 37 ist wiederum in einem Zentrierring 41 mit einem u - förmigen Querschnitt gelagert. Zur Geräuschminimierung ist der Zentrierring 41 in beide Richtungen zum Ventilkörper 23 fixiert, so dass Strömungseinflüsse im kolbenstangenseitigen Arbeitsraum keine Relativbewegung des Zentrierrings 41 zum Ventilkörper 23 erzeugen.

Die Scheibenfeder 39 stützt sich an einem zum Ventilkörper 23 separaten Bauteil ab, das in diesem konkreten Ausführungsbeispiel von einer am Ventilkörper 23 montierbaren Stützfläche 43 in der Bauform eines Sicherungsrings 45 gebildet wird.

Bei einer Ausfahrbewegung des Kolbens 7 wird Dämpfmedium aus dem kolbenstangenseitigen Arbeitsraum 9 über eine nicht dargestellte Anschlussöffnung in die Fluidverbindung 21 gefördert. Am unteren Ende der Fluidverbindung 21 strömt das Dämpfmedium in den Ventilkörper 23 ein, siehe Radialkanal 31, und am Ende des in Längsrichtung verlaufenden Kanals 33 hebt die Ventilscheibe 35 von einer Sitzfläche des Ventilkörpers 47 gegen die Kraft der Scheibenfeder 39 ab, so dass Dämpfmedium in den kolbenstangenfernen Arbeitsraum 11 fließen kann. Die maximale Abhubposition der Ventilscheibe wird von den vertikalen Stegen 49 des Zentrierrings 41 bestimmt.

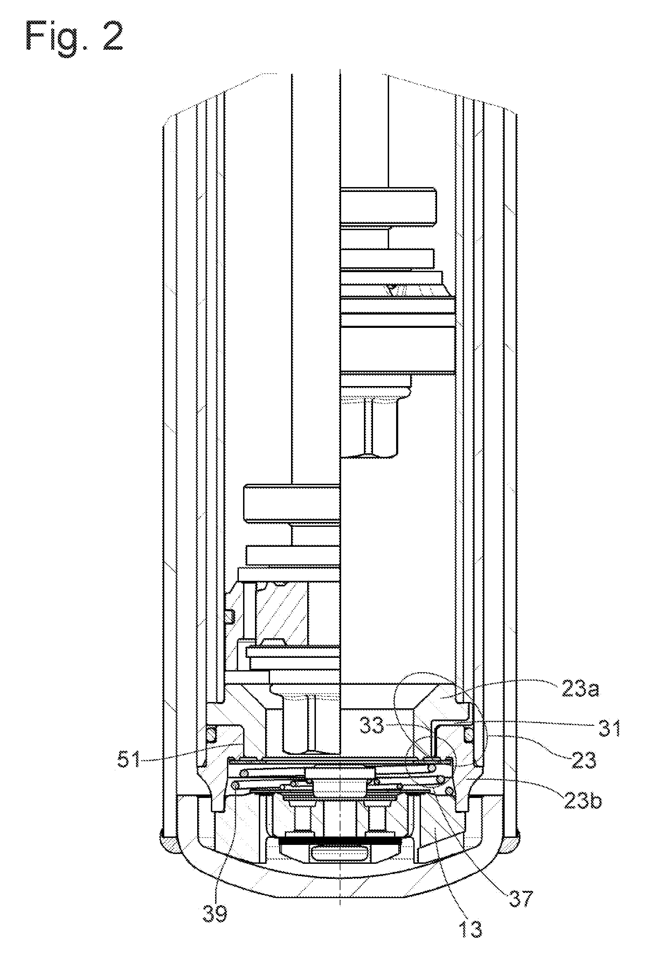

Die Fig. 2 zeigt eine Alternativvariante eines Ventilkörpers 23 mit einem Rückschlagventil 37, bei der der Ventilkörper 23 mehrteilig aus jeweils ringförmigen Ventilkörpern 23a; 23b gebildet wird, die im Bereich des Kanals 31; 33 eine Teilungsfuge bilden. Über eine in Längsrichtung verlaufende Mantelfläche 51 bilden die einzelnen Ventilkörperringe 23a; 23b eine Presspassung, die wiederum die Ventilkörperringe 23a; 23b zu einer Baueinheit zusammenhält. Ein weiterer Unterschied zur Ausführung nach Fig. 1 besteht darin, dass als Federelement 39 eine Schraubenfeder verwendet wird, die sich unabhängig vom Ventilkörper 23 am separaten Bodenventilkörper 13 abstützt, und die Ventilscheibe 35 vorspannt.

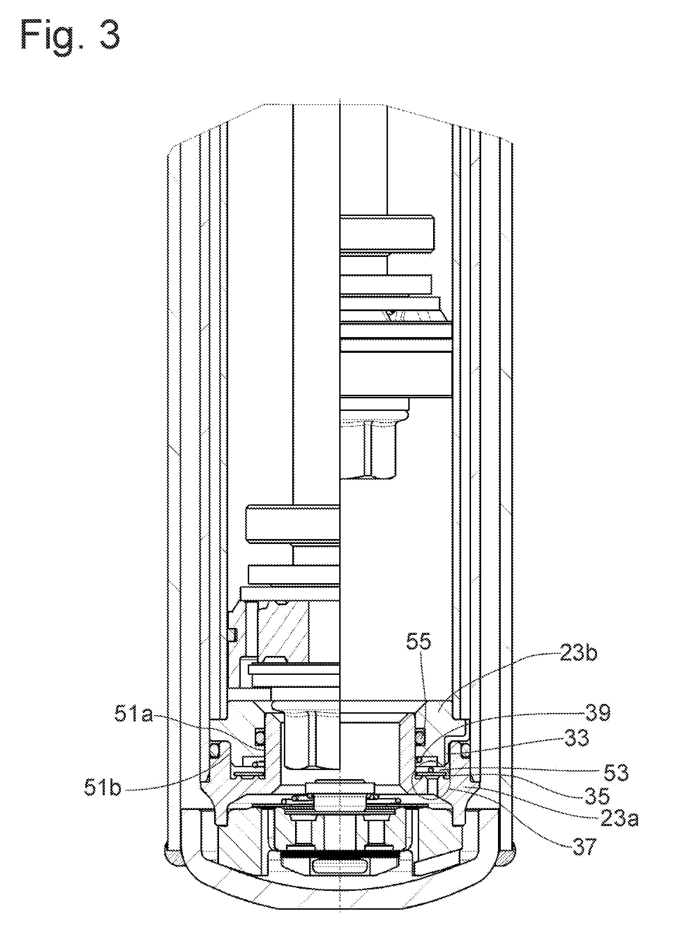

Die Fig. 3 zeigt ebenfalls eine mehrteilige Ventilkörperkonstruktion, bei der ein erster Ventilkörperring 23a einen Ringraum 53 bildet, der die Ventilscheibe 35 und das Federelement 39 aufnimmt. Der in Längsrichtung verlaufende Kanal 33 mündet in den Ringraum 53, der von dem zweiten Ventilkörperring 23b in der Funktion eines Deckels abgeschlossen wird. Zur axialen Fixierung der einzelnen Ventilkörperringe können wiederum Mantelflächen 51 a; 51 b für Presspassungen oder auch eine Ringdichtung 55 verwendet werden.

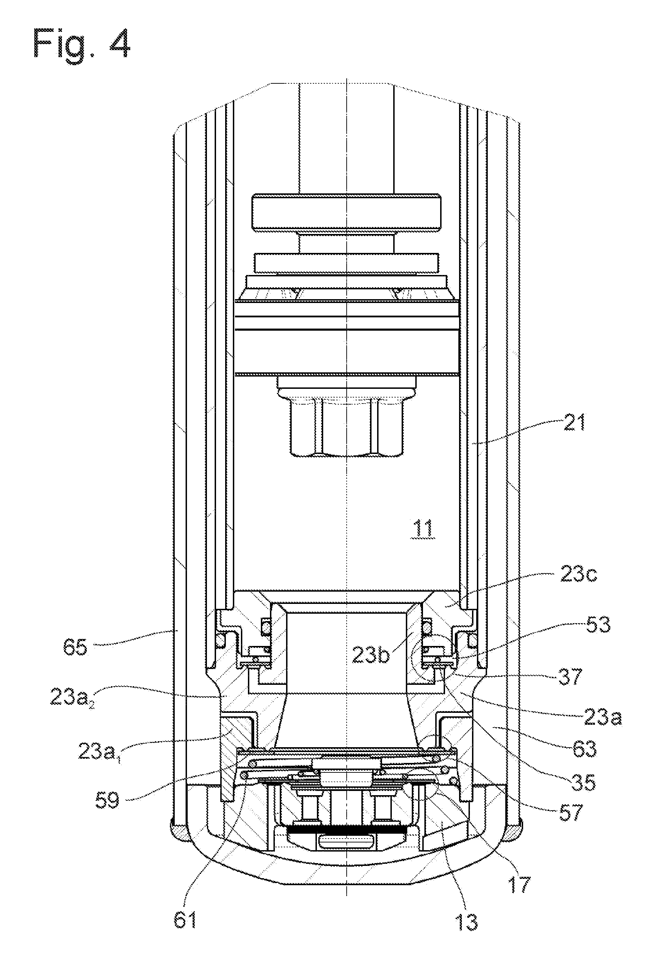

Mit den Fig. 3 und Fig. 4 soll gezeigt werden, dass das Rückschlagventil 32 ausgehend vom kolbenstangenfernen Arbeitsraum 11 auch eine Öffnungsfunktion in Richtung der Fluidverbindung 21 ausführen kann. Der Ventilkörper 23 ist wiederum mehrteilig ausgeführt. Ein erster und ein zweiter Ventilkörperring 23a; 23b bilden den Ringraum 53, der an den Kanal 33 angeschlossen ist und die Ventilscheibe 35 aufnimmt. In dem Ringraum ist zumindest teilweise ein weiterer ringförmiger Ventilkörper 23c angeordnet, der für den Ringraum 53 praktisch ähnlich wie in Fig. 3 einen Deckel bildet.

Zusätzlich zu den Varianten nach den Fig. 1 bis 3 verfügt das Ausführungsbeispiel nach der Fig. 4 neben dem ersten in Zuströmrichtung in den kolbenstangenfernen Arbeitsraum 11 sich öffnendes Rückschlag 17 im Bodenventilkörper 13 und über ein zusätzliches in den kolbenstangenfernen Arbeitsraum 11 sich öffnendes Rückschlagventil 57 im Ventilkörper 23c, dessen Ventilscheibe 59 entsprechend der Fig. 2 von einer Schraubenfeder 61 auf der Oberseite des Bodenventilkörpers 13 in Schließrichtung vorgespannt wird. Damit stehen zwei Rückschlagventile 17; 57 zur Verfügung, die sich ausgehend z. B. von einem Ausgleichsraum 63 zwischen einem Behälterrohr 65 und dem Fluidverbindungsrohr 19 in Einströmrichtung in den kolbenstangenfernen Arbeitsraum 11 öffnen und einen ggf. gestuft wirksamen Querschnitt freigeben, indem man z. B. unterschiedliche Öffnungskräfte für die Rückschlagventile 17; 57 vorsieht. Der Ventilkörper 23a kann, wie bereits in der Fig. 21 prinzipiell gezeigt, im Bereich der Kanalführung über eine Teilungsfuge in zwei Ventilkörperringe 23a1; 23a2 unterteilt werden, wie im linken Halbschnitt dargestellt ist.

Die Erfindung ist für alle Schwingungsdämpferbauformen sinnvoll nutzbar, die zusätzlich zu Dämpfventilen im Kolben oder im Bodenventilkörper über weitere Ventil - oder Speicherfunktionselemente beliebiger Bauform verfügen.

### Bezugszeichenliste

- 1: Schwingungsdämpfer
- 3: Zylinder
- 5: Kolbenstange
- 7: Kolben
- 9: kolbenstangenseitiger Arbeitsraum
- 11: kolbenstangenferner Arbeitsraum
- 13: Bodenventilkörper
- 15: Dämpfventil
- 17: Rückschlagventil
- 19: Fluidverbindungsrohr
- 21: Fluidverbindung
- 23: Ventilkörper
- 25: erste axiale Stützfläche
- 27: zweite axiale Stützfläche
- 29: Anschlussöffnung
- 31: Radialkanal
- 33: Kanal
- 35: Ventilelement, Ventilscheibe
- 37: Rückschlagventil
- 39: Federelement
- 41: Zentrierring
- 43: Stützfläche
- 45: Sicherungsring
- 47: Ventilkörper
- 49: Steg
- 51: Mantelfläche
- 53: Ringraum
- 55: Ringdichtung
- 57: Rückschlagventil
- 59: Ventilscheibe
- 61: Schraubenfeder
- 63: Ausgleichsraum

## Patentansprüche

1. Schwingungsdämpfer (1), umfassend einen Zylinder (3), der von einem Kolben (7) an einer Kolbenstange (5) in einen kolbenstangenseitigen und einen kolbenstangenfernen Arbeitsraum (9; 11) unterteilt wird, wobei eine Fluidverbindung (21) zu mindestens einen der Arbeitsräume (9; 11) von einem Rückschlagventil (37) angesteuert wird, das eine radiale Anschlussöffnung (29) aufweist, die mit einem Ventilelement (35) zusammenwirkt,
**dadurch gekennzeichnet,**
**dass** sich der radialen Anschlussöffnung (29) ein in Längsrichtung des Schwingungsdämpfers erstreckender Kanal (33) anschließt, der von dem mindestens einem Ventilelement (35) abgedeckt wird.

2. Schwingungsdämpfer nach Anspruch 1,
**dadurch gekennzeichnet,**
**dass** das Ventilelement in Form einer Ventilscheibe (35) von mindestens einem Federelement (39) in Schließrichtung vorgespannt ist.

3. Schwingungsdämpfer nach Anspruch 1,
**dadurch gekennzeichnet,**
**dass** das Rückschlagventil (37) von einem mehrteiligen ringförmigen Ventilkörper (23a; 23b; 23c) gebildet wird, wobei der Ventilkörper (23a; 23b; 23c) im Bereich des Kanals (33) eine Teilungsfuge aufweist.

4. Schwingungsdämpfer nach Anspruch 3,
**dadurch gekennzeichnet,**
**dass** mindestens zwei Ventilkörper (23a - 23c) über mindestens eine in Längsrichtung parallele Mantelfläche (51a; 51b; 51c) eine Presspassung bilden.

5. Schwingungsdämpfer nach Anspruch 3,
**dadurch gekennzeichnet,**
**dass** zwischen den einzelnen Ventilkörperbauteilen (23a - 23c) mindestens eine Ringdichtung (55) angeordnet ist.

6. Schwingungsdämpfer nach Anspruch 1,
**dadurch gekennzeichnet,**
**dass** die mindestens zwei ringförmigen Ventilkörper (23a - 23c) einen Ringraum (53) bilden, der an den Kanal (33) angeschlossen ist und die Ventilscheibe (35) aufnimmt.

7. Schwingungsdämpfer nach Anspruch 6,
**dadurch gekennzeichnet,**
**dass** ein weiterer Ventilkörper (23b; 23c) in dem Ringraum (53) zumindest teilweise angeordnet ist.

8. Schwingungsdämpfer nach Anspruch 2,
**dadurch gekennzeichnet,**
**dass** das Federelement (39) als eine Scheibenfeder ausgeführt ist.

9. Schwingungsdämpfer nach Anspruch 8,
**dadurch gekennzeichnet,**
**dass** die Scheibenfeder (39) in einem Zentrierring (41) zum Ventilkörper (23) gelagert ist.

10. Schwingungsdämpfer nach Anspruch 9,
**dadurch gekennzeichnet,**
**dass** der Zentrierring (41) einen u - förmigen Querschnitt aufweist.

11. Schwingungsdämpfer nach Anspruch 9,
**dadurch gekennzeichnet,**
**dass** der Zentrierring (41) axial in beide Richtungen fixiert ist.

12. Schwingungsdämpfer nach Anspruch 2,
**dadurch gekennzeichnet,**
**dass** sich das Federelement (39) an einem vom Ventilkörper (23) separaten Bauteil (13; 45) abstützt

13. Schwingungsdämpfer nach Anspruch 2,
**dadurch gekennzeichnet,**
**dass** der Ventilkörper (23) eine montierbare Stützfläche (43) für das Federelement (39) aufweist.

14. Schwingungsdämpfer nach Anspruch 13,
**dadurch gekennzeichnet,**
**dass** die montierbare Stützfläche (43) von einem Sicherungsring (45) gebildet wird.

15. Schwingungsdämpfer nach Anspruch 1,
**dadurch gekennzeichnet,**
**dass** der Ventilkörper (23; 23a - 23c) eine erste axiale Stützfläche (25) für den Zylinder (3) und eine zweite axiale Stützfläche (27) für ein Fluidverbindungsrohr (19) aufweist.

16. Schwingungsdämpfer nach Anspruch 1,
**dadurch gekennzeichnet,**
**dass** sich der Ventilkörper (23) an einem Bodenventilkörper (13) des kolbenstangenfernen Arbeitsraums (11) abstützt.

17. Schwingungsdämpfer nach einem der Ansprüche 1 bis 16,
**dadurch gekennzeichnet,**
**dass** der Bodenventilkörper (13) ein erstes in Zuströmrichtung in den kolbenstangenfernen Arbeitsraum (11) sich öffnendes Rückschlagventil (17) umfasst und der Ventilkörper (23a - 23c) ein zusätzliches in den kolbenstangenfernen Arbeitsraum (11) sich öffnendes Rückschlagventil (57) aufweist.
